# FASCICULE DE BREVET EUROPEEN

(11) **EP 0 526 616 B1**
(45) Date de publication et mention de la délivrance du brevet: **03.08.1994**
(21) Numéro de dépôt: 92906405.3
(22) Date de dépôt: 12.02.1992
(51) Int. Cl.: F02M 47/00

(54) **DISPOSITIF D'INJECTION DE COMBUSTIBLE POUR MOTEURS A COMBUSTION INTERNE**
Kraftstoffeinspritzvorrichtung für Verbrennungsmotoren
FUEL INJECTION DEVICE FOR INTERNAL COMBUSTION ENGINES

(30) Priorité: 25.02.1991 FR 9102208
(43) Date de publication de la demande: 10.02.1993
(73) Titulaire: Melchior, Jean Frédéric, F-75014 Paris (FR)
(72) Inventeur: Melchior, Jean Frédéric, F-75014 Paris (FR)
(74) Mandataire: Lemoine, Michel
(86) Numéro de dépôt international: FR9200128
(87) Numéro de publication internationale: WO9214924

(56) Documents cités:
- EP-A- 0 174 083
- EP-A- 0 239 259
- DE-A- 2 704 688
- FR-A- 1 467 178
- FR-A- 2 297 330
- FR-A- 2 437 495
- US-A- 4 852 808

## Description

Dispositif d'injection de liquide, notamment de combustible, dans au moins une chambre pressurisée d'une machine à fonctionnement périodique telle que moteur à combustion interne et moteur de ce type équipé de ce dispositif.

Selon l'un de ses aspects, l'invention concerne un dispositif d'injection de liquide dans au moins une chambre pressurisée par un gaz et faisant partie d'une machine à fonctionnement périodique, telle qu'un moteur à combustion interne, dispositif qui comporte un organe de mise en pression du liquide à injecter, constitué par une première cavité de volume variable délimitée par un piston animé d'un mouvement alternatif à l'intérieur d'un cylindre,
laquelle première cavité communique d'une part avec des moyens de réserve de liquide sous basse pression par l'intermédiaire d'un organe de commande établissant cycliquement une telle communication en synchronisme avec le fonctionnement périodique de ladite machine et d'autre part par un passage ouvert en permanence, sous réserve de la présence d'un clapet de réaspiration ou organe analogue, avec un injecteur constitué d'une buse et d'une aiguille mobile, de révolution,
laquelle buse comporte une deuxième cavité, reliée au susdit passage et délimitée latéralement par une paroi cylindrique de directrice circulaire et axialement par une paroi partiellement conique formant siège et coaxiale à ladite paroi cylindrique, et au moins un orifice d'injection débouchant dans la susdite chambre pressurisée,
laquelle aiguille comporte une partie cylindrique formant piston et capable de coulisser avec un jeu de fonctionnement minimal à l'intérieur de la susdite paroi cylindrique de la buse et une partie conique coopérant avec le susdit siège,
laquelle aiguille est agencée d'une part de façon à être maintenue, au repos, en appui sur ce siège par des moyens de rappel de façon à interrompre la communication entre la deuxième cavité et le ou les orifices d'injection et d'autre part de façon que sa section d'appui sur le siège, projetée sur un plan perpendiculaire à l'axe de l'aiguille, soit inférieure à la section transversale de la partie cylindrique formant piston de l'aiguille, la face libre de la partie cylindrique de l'aiguille formant piston délimitant une troisième cavité de volume variable qui communique avec un accumulateur sous pression dudit liquide en constituant ainsi les susdits moyens de rappel.

L'invention concerne plus particulièrement, mais non exclusivement, les dispositifs d'injection de combustible liquide pour moteurs à combustion interne, la susdite chambre pressurisée étant alors constituée par la ou chaque chambre de travail ou de combustion du moteur.

Un dispositif d'injection du type défini ci-dessus est décrit dans le FR-A-2.326.588. Dans ce cas, le piston de l'organe de mise en pression reçoit son mouvement alternatif d'un piston libre dont l'une des faces transversales est soumise en permanence à la pression atmosphérique tandis que son autre face transversale est alternativement soumise, par intervention de deux soupapes, à la pression de liquide de l'accumulateur et à la pression atmosphérique. Sans modifier le fonctionnement du dispositif connu, le piston susvisé pourrait d'ailleurs recevoir son mouvement alternatif d'un système à came rotative et à moyens de rappel élastiques.

Quelle que soit la façon dont est mû le piston de l'organe de mise en pression, la susdite aiguille est alternativement soulevée de son siège par la pression de liquide établie dans la susdite deuxième cavité et agissant sur la section différentielle de l'aiguille, contre l'action de la pression du liquide de l'accumulateur agissant dans la troisième cavité et sur la totalité de la section de l'aiguille, puis rappelée contre son siège par cette dernière pression après réduction de la pression de liquide dans la deuxième cavité. Les mouvements alternatifs de l'aiguille en fonctionnement sont donc provoqués exclusivement par voie hydraulique.

Dans ce dispositif connu, la quantité de combustible injectée à chaque cycle est déterminée par la longueur de la course de retour du piston libre lors du cycle précédent, cette longueur étant déterminée par le moment où les susdites soupapes s'ouvrent et se ferment. On ignore cependant dans quelles conditions sont actionnées ces soupapes. Il est en outre à noter que le dispositif connu nécessite, outre une décharge de liquide à la pression atmosphérique, trois sources de liquide de pressions différentes, à savoir le susdit organe de mise en pression (600 bars), une source de liquide à haute pression (300 bars) pour alimenter l'accumulateur et une source de liquide à pression relativement basse (10 bars) à fonctions multiples.

L'invention a pour but d'agencer le dispositif d'injection de façon telle que la quantité de liquide débitée à chaque cycle puisse être réglée de façon simple. Elle a en outre pour but de simplifier la construction connue en n'ayant recours qu'à une seule source de liquide sous pression, tout en conservant l'avantage de cette construction dû à l'absence de ressort de rappel alternatif de l'aiguille et par conséquent des inconvénients liés à un tel ressort. Elle a également de préférence pour but de permettre d'ajuster, au cours du fonctionnement périodique de la machine, la pression d'injection régnant dans la deuxième cavité, en fonction de la pression régnant dans la chambre pressurisée, de façon à maintenir des conditions optimales de pénétration et de pulvérisation du liquide injecté.

A cet effet, l'invention a pour objet un dispositif d'injection, du type défini en préambule, qui est essentiellement caractérisé en ce que la première cavité communique avec la troisième cavité par l'intermédiaire d'un orifice calibré et d'un clapet uni-directionnel montés en série et en ce que le susdit accumulateur communique avec les susdits moyens de réserve de liquide à basse pression par l'intermédiaire d'un orifice de fuite, à section de passage variable, équipé de moyens de réglage agencés de manière à maintenir la pression du liquide dans l'accumulateur à une valeur sensiblement constante, pour chaque régime de fonctionnement donné, au cours du fonctionnement périodique de la machine. Selon un mode de réalisation avantageux, les susdits moyens de réglage de l'orifice de fuite sont sensibles à au moins un paramètre de fonctionnement de la machine et agencés de façon à asservir à ce paramètre de fonctionnement la pression sensiblement constante régnant dans l'accumulateur.

On obtient ainsi un dispositif d'injection atteignant bien les buts assignés à l'invention puisque, d'une part, son réglage se fait par action sur l'orifice de fuite et que, d'autre part, l'organe de mise en pression défini ci-dessus constitue sa seule source de liquide sous pression.

Dans le cas où le dispositif conforme à l'invention est utilisé pour alimenter en combustible liquide les chambres de travail de volume variable d'un moteur à combustion interne comprenant au moins deux chambres de travail (dont chacune constitue alors une chambre pressurisée, selon la définition donnée ci-dessus), il est avantageux que la troisième cavité propre à l'injecteur de chacune des chambres de travail communique avec un accumulateur unique de liquide sous pression, lequel communique avec les moyens de réserve de liquide sous basse pression par l'intermédiaire d'un unique orifice de fuite à section de passage variable, et que les passages et communications entre la première cavité propre à chaque injecteur d'une part et, respectivement, l'injecteur, l'organe de commande établissant une communication cyclique avec les moyens de réserve de liquide sous basse pression, l'orifice calibré et son clapet uni-directionnel vers l'accumulateur unique d'autre part soient aussi identiques que possible d'un injecteur à l'autre.

Il est ainsi possible, à l'aide d'un accumulateur unique, de régler à la fois l'alimentation des diverses chambres de travail sans introduire de déséquilibre entre celles-ci.

Il est à noter que le FR-A-2.437.495 décrit un dispositif d'injection analogue à celui du susdit FR-A-2.326.588 mais dépourvu d'accumulateur.

Selon un autre de ses aspects, l'invention a pour objet un moteur à combustion interne, à au moins une chambre de travail de volume variable et à injection directe de combustible liquide dans la ou chaque chambre de travail, qui est caractérisé en ce que son dispositif d'injection est établi conformément à l'invention.

L'invention va être maintenant exposée plus en détail à l'aide des dessins schématiques annexés dont
les figures 1 et 2 illustrent respectivement deux modes de réalisation différents de l'invention ;
les figures 3 et 4 représentent un moteur à combustion interne établi conformément à l'invention, respectivement par une coupe transversale passant par l'axe de l'un de ses cylindres et par une vue en élévation ;
les figures 5, 6 et 7 représentent, par des vues en coupe selon les lignes V-V, VI-VI et VII-VII de la figure 4, les positions occupées en même temps par des distributeurs tournants ; et
la figure 8 représente, par une demi-vue en coupe axiale à plus grande échelle, un détail de l'injecteur de la figure 3.

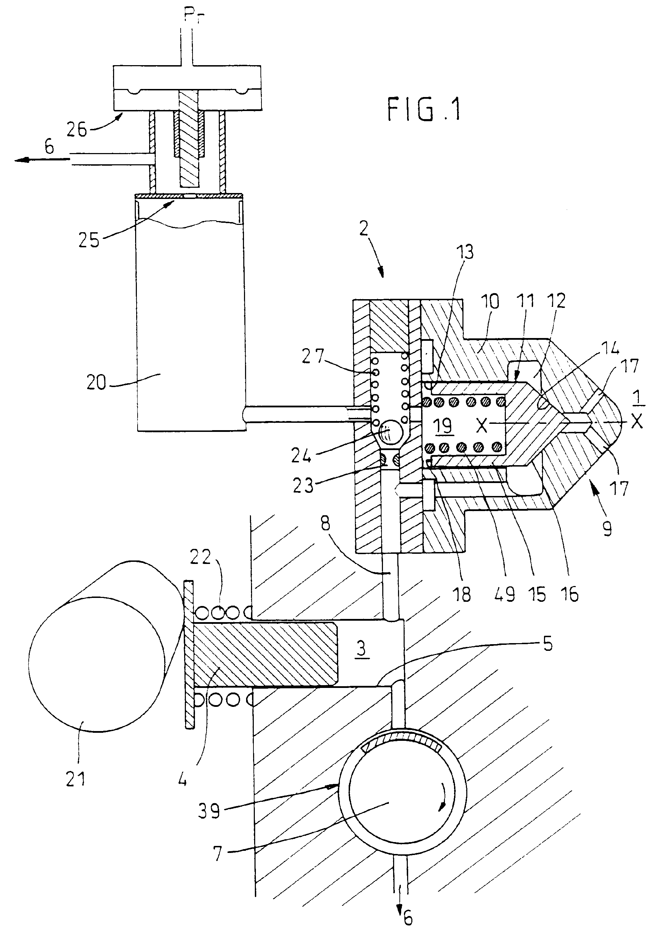

Tel qu'il est illustré à la figure 1, le dispositif auquel l'invention est relative est destiné à injecter du liquide dans une chambre 1, pressurisée par un gaz et faisant partie d'une machine à fonctionnement périodique 2. De préférence, cette machine est constituée par un moteur à combustion interne et en particulier par un moteur suralimenté par un groupe turbo-compresseur (non représenté) mû par les gaz d'échappement du moteur 2, auquel cas la chambre 1 constitue la ou l'une des chambres de travail ou de combustion de ce moteur 2.

Le dispositif d'injection comporte un organe de mise en pression du liquide à injecter qui est constitué par une première cavité 3, de volume variable, délimitée par un piston 4 animé d'un mouvement alternatif à l'intérieur d'un cylindre 5. La première cavité 3 communique d'une part avec des moyens de réserve de liquide sous basse pression (réservoir) 6 par l'intermédiaire d'un organe de commande 7 établissant une telle communication en synchronisme avec le fonctionnement périodique de la machine 2 et d'autre part, par un passage ouvert en permanence 8 (sous réserve de la présence sur ce passage d'un clapet de réaspiration de type connu, réalisé par exemple par la société allemande Robert BOSCH GmbH, de Stuttgart), avec un injecteur 9 constitué d'une buse 10 et d'une aiguille mobile 11 ayant une forme de révolution. Cette buse 10 comporte une deuxième cavité 12 reliée au passage 8 et délimitée latéralement par une paroi cylindrique 13, de directrice circulaire, et axialement par une paroi partiellement conique 14 formant siège et coaxiale à ladite paroi cylindrique 13. La buse 10 comporte aussi au moins un orifice d'injection 17 débouchant dans la chambre 1.

L'aiguille 11 comporte une partie cylindrique 15 formant piston et capable de coulisser, avec un jeu de fonctionnement minimal, à l'intérieur de la paroi cylindrique 13 de la buse 10 et une partie conique 16 coopérant avec le siège 14.

L'aiguille 11 est agencée de façon à être maintenue, au repos, en appui sur le siège 14 par des moyens de rappel de façon à interrompre la communication entre la deuxième cavité 12 et le ou les orifices d'injection 17. L'aiguille 11 est en outre agencée à la façon d'un piston différentiel de telle sorte que sa section d'appui sur le siège 14, projetée sur un plan perpendiculaire à l'axe X-X de l'aiguille 11, soit inférieure à la section transversale de la partie cylindrique 15, formant piston, de l'aiguille 11. Enfin, la face libre 18 de cette partie cylindrique 15, c'est-à-dire sa face éloignée de la partie conique 16, délimite une troisième cavité 19, de volume variable, qui communique avec un accumulateur sous pression 20 dudit liquide, en constituant ainsi lesdits moyens de rappel.

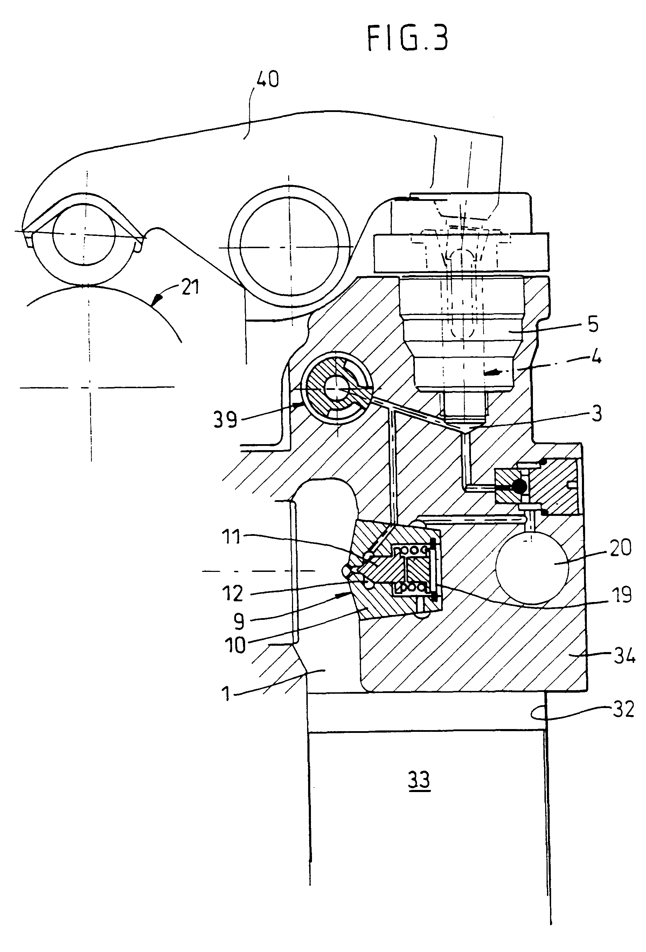

Le piston 4 peut recevoir son mouvement alternatif soit, comme le montre schématiquement la figure 1, d'une came rotative 21 entraînée en synchronisme avec la machine 2, contre l'action d'un ressort de rappel 22, soit de moyens hydrauliques dont un exemple est décrit dans le susdit FR-A-2.326.588, soit de tous autres moyens équivalents. La came 21 peut agir sur le piston 4 soit directement (figure 1), soit plus généralement par l'intermédiaire d'un culbuteur 40 (figure 3).

Lorsque l'aiguille 11 est en appui sur son siège 14, elle est soumise, dans le sens de la fermeture, à la pression régnant dans la troisième cavité 19 et agissant sur la totalité de la section de sa partie cylindrique 15 et, dans le sens de l'ouverture, à la pression régnant dans la deuxième cavité 12, sur la différence entre la section de la partie cylindrique 15 et sa section d'appui sur le siège 14. Lors de chaque course de refoulement du piston 4, la pression transmise par le passage 8 dans la deuxième cavité 12 augmente jusqu'à ce que son action sur l'aiguille 11 devienne prépondérante et que l'aiguille 11 s'écarte de son siège 14, ce qui permet à une partie du liquide sous pression admis dans la deuxième cavité 12 d'atteindre les orifices 17 et d'être injectée dans la chambre 1. Lorsque l'organe de commande 7 établit la communication entre la première cavité 3 et les moyens de réserve de liquide sous basse pression 6, la pression régnant dans la deuxième cavité 12 chute et permet à la pression régnant dans la troisième cavité 19 de rappeler l'aiguille 11 sur son siège 14.

Cela étant, conformément à l'invention, la première cavité 3 communique avec la troisième cavité 19 par l'intermédiaire d'un orifice calibré 23 et d'un clapet uni-directionnel (ou anti-retour) 24 montés en série et le susdit accumulateur 20 communique avec les susdits moyens de réserve de liquide à basse pression 6 par l'intermédiaire d'un orifice de fuite 25, à section de passage variable, équipé de moyens de réglage 26 agencés de manière à maintenir la pression du liquide dans l'accumulateur 20 à une valeur sensiblement constante, pour chaque régime de fonctionnement donné, au cours du fonctionnement périodique de la machine 2. Comme le montre la figure 1, le clapet uni-directionnel 24 peut être constitué d'une bille soumise à l'action d'un ressort de rappel 27 et il est de toute façon agencé pour autoriser le liquide refoulé par le piston 4 à atteindre la troisième cavité 19 et l'accumulateur 20 et pour l'empêcher de revenir en sens inverse.

Le ou chaque orifice 17 assurant la communication entre la deuxième cavité 12 et la chambre pressurisée 1, lorsque l'aiguille 11 est séparée de son siège 14, est de préférence un orifice cylindrique percé dans la buse 10, en aval de ce siège 14, et, dans certains cas de réalisation, sur la paroi partiellement conique 14.

Les moyens de rappel de l'aiguille 11 sur son siège 14 comportent de préférence en outre un ressort mécanique 49 dimensionné pour permettre le fonctionnement du dispositif lors de la mise en route de la machine 2, à faible fréquence, alors que la pression de liquide n'est pas encore établie dans l'accumulateur 20.

Les moyens de réglage 26 sont de préférence sensibles à au moins un paramètre de fonctionnement Pr de la machine 2 et agencés de façon à asservir à ce paramètre de fonctionnement la pression sensiblement constante régnant dans l'accumulateur 20. Ce paramètre de fonctionnement est avantageusement un paramètre dont dépend la valeur de la pression régnant dans la chambre 1 au moment de l'injection du liquide dans celle-ci.

On obtient ainsi un dispositif dont la seule source de liquide sous pression est constitué par l'ensemble du piston 4 et du cylindre 5 et qui alimente en parallèle la deuxième cavité 12 et, par l'intermédiaire de l'orifice calibré 23 et du clapet uni-directionnel 24, la troisième cavité 19 et l'accumulateur 20. Le clapet uni-directionnel 24 maintient la pression dans l'accumulateur 20 lors de la course d'aspiration du piston 4 (ou de la mise de la première cavité 3 à la décharge par l'organe de commande 7) et empêche alors cette pression de se propager dans la deuxième cavité 12 par l'intermédiaire du passage 8 et d'interférer ainsi avec le fonctionnement décrit ci-dessus de l'aiguille 11. Par la simple action des moyens de réglage 26, la valeur constante à laquelle est maintenue la pression dans l'accumulateur 20 peut être adaptée aux conditions de fonctionnement de la machine 2. En particulier, elle permet d'ajuster, pendant le fonctionnement de la machine, la valeur de la pression du liquide dans la deuxième cavité 12, en amont du ou des orifices 17, en fonction de la valeur de la pression de gaz régnant dans la chambre 1 en aval des susdits orifices 17, de façon à maintenir des conditions optimales de pulvérisation et de pénétration du liquide injecté dans la chambre 1.

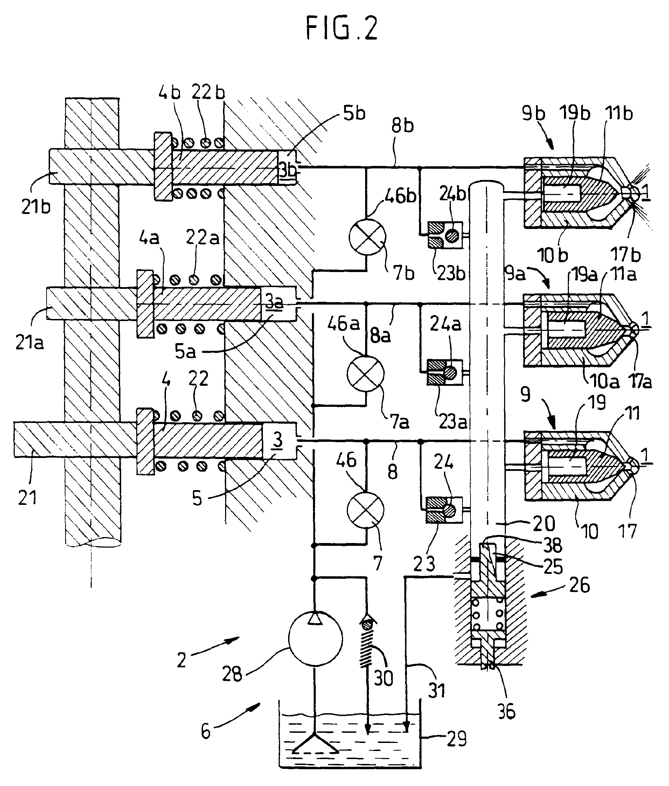

Il a été dit ci-dessus que la seule source de liquide sous pression était constituée par l'ensemble du piston 4 et du cylindre 5. Ceci n'exclut pas la présence d'une pompe auxiliaire, dite "pompe de gavage", telle que celle désignée par 28 à la figure 2, qui est destinée à aspirer du liquide dans un réservoir 29 et à le mettre en charge à l'aspiration du cylindre 5, sous une pression qui est limitée par un organe de tarage 30 et qui n'a d'ailleurs aucune influence sur le fonctionnement du dispositif d'injection. Son rôle est en effet de limiter les risques de cavitation et de formation de bulles dans le circuit de liquide sous pression.

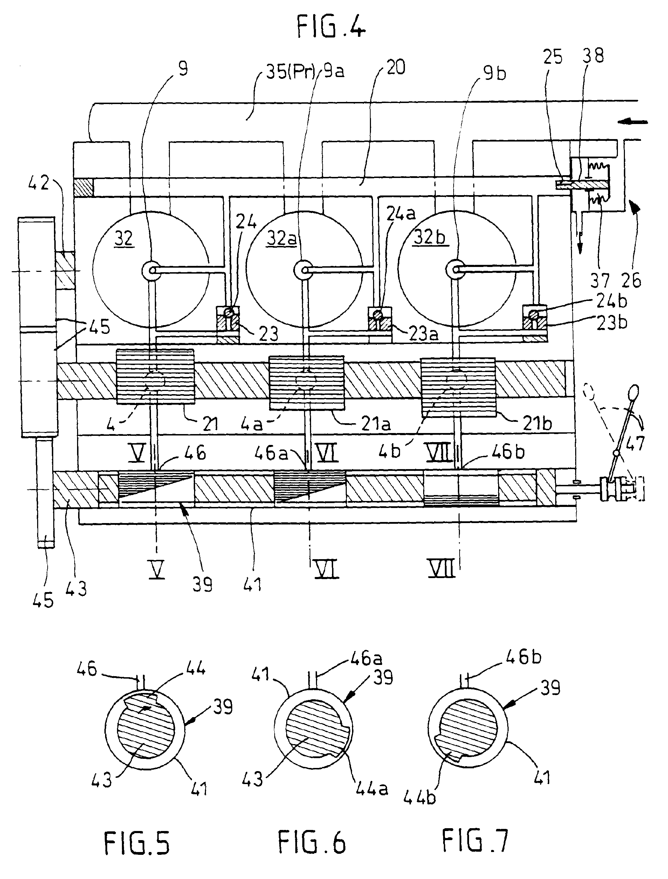

Les figures 2 à 4 représentent une application préférée du dispositif d'injection conforme à l'invention. Ce dispositif est destiné à injecter du combustible liquide dans les chambres de travail 1 de volume variable d'un moteur à combustion interne 2 comprenant au moins deux telles chambres de travail. A titre d'exemple, les figures 2 et 4 représentent un moteur 2 comprenant trois chambres de travail désignées respectivement par 1, 1a et 1b, qui sont limitées chacune à l'intérieur de cylindres 32, 32a, 32b par un piston tel que 33, et par une culasse 34 et alimentées respectivement par des injecteurs 9, 9a et 9b. Dans ce cas, la troisième cavité 19, 19a, 19b propre à l'injecteur 9, 9a, 9b de chacune des chambres de travail 1, 1a, 1b communique avec un accumulateur unique 20 de liquide sous pression, lequel communique par un canal 31 avec les moyens de réserve à basse pression 6 (ou de préférence avec le réservoir 29 de ceux-ci) à travers un unique orifice de fuite 25 à section de passage variable. Les passages et communications entre la première cavité 3, 3a, 3b propre à chaque injecteur 9, 9a, 9b d'une part et respectivement cet injecteur, l'organe de commande 7, 7a, 7b établissant la communication cyclique avec les moyens de réserve à basse pression 6 et l'orifice calibré 23, 23a, 23b et son clapet uni-directionnel 24, 24a, 24b vers l'acccumulateur unique 20 d'autre part sont aussi identiques que possible d'un injecteur 9, 9a, 9b à l'autre.

Dans ce cas, le paramètre de fonctionnement auquel sont sensibles les susdits moyens de réglage 26 est avantageusement constitué par la pression Pr régnant dans le collecteur d'admission 35 du moteur 2, notamment lorsque celui-ci est un moteur suralimenté par un groupe turbo-compresseur mû par les gaz d'échappement du moteur.

Bien que la figure 2 représente des moyens de réglage 26 à commande manuelle (vis 36), il est préférable d'avoir recours, comme le montre la figure 4, à une commande automatique constituée par exemple par un soufflet 37 soumis, sur sa face extérieure, à la pression Pr régnant dans le collecteur d'admission 35 et actionnant un organe de réglage de fuite 38.

Le ou les susdits organes de commande 7, 7a, 7b établissant la communication cyclique entre la ou les premières cavités 3, 3a, 3b et les moyens de réserve à basse pression de combustible 6 sont de préférence réalisés à l'aide d'un distributeur tournant 39 (figures 3 et 4) constitué par un fourreau cylindrique creux 41, communiquant avec les susdits moyens de réserve à basse pression de combustible 6, et dans lequel débouchent la ou les communications propres à la ou chacune des premières cavités 3, 3a, 3b et à l'intérieur duquel tourne, en synchronisme avec l'arbre principal 42 du moteur 2, un arbre 43 comportant des paliers et des évidements ainsi que des portions de surface cylindrique circulaire 44, de diamètre extérieur égal, au jeu de fonctionnement près, au diamètre intérieur du fourreau 41 et coopérant avec les débouchés 46, 46a, 46b des susdites communications de façon à interrompre celles-ci cycliquement, pendant une durée angulaire identique pour chaque injecteur 9, 9a, 9b et déphasée en fonction de l'ordre d'allumage des cylindres 32, 32a, 32b du moteur 2. Par l'intermédiaire d'un train d'engrenage 45, l'arbre 43 est entraîné par l'arbre principal 42 à la même vitesse angulaire que celui-ci lorsque le moteur 2 est du type à deux temps ou à la moitié de cette vitesse lorsqu'il s'agit d'un moteur du type à quatre temps.

La durée angulaire de l'interruption desdites communications cycliques, qui est réglée en fonction de la largeur angulaire croissante, selon la direction axiale de l'arbre 43, des susdites portions de surface cylindrique 44, 44a, 44b, peut être modifiée pendant le fonctionnement du moteur en déplaçant axialement l'arbre 43 par rapport au fourreau 41. A la figure 4, il a été supposé que ce déplacement axial était provoqué par pivotement d'un levier 47, entre les deux positions représentées en trait plein et en trait interrompu. La phase de l'interruption desdites communications cycliques, par rapport à la position angulaire de l'arbre principal 42, peut être modifiée en fonctionnement grâce à un mécanisme d'entraînement en rotation de l'arbre 43 à calage variable connu en soi mais non représenté.

Les susdits moyens de réglage 26 sont de préférence agencés de façon à donner à la pression de liquide régnant dans l'accumulateur 20 une valeur telle que la pression de liquide dans la deuxième cavité 12, lorsque l'aiguille 11 est écartée de son siège, soit au moins égale à trois fois la pression régnant dans la chambre pressurisée 1 au moment de l'injection du liquide. De cette manière, la pénétration et la pulvérisation du liquide injecté dans la chambre pressurisée sont réalisées dans des conditions optimales.

En asservissant la pression de liquide régnant dans l'accumulateur 2O à la pression Pr de l'air régnant dans le collecteur d'admission 35 du moteur, on peut ainsi faire varier la pression de liquide dans la deuxième cavité 12, en amont du ou des orifices d'injection 17, dans le même sens que la pression régnant dans les chambres de travail 1 du moteur au moment de l'injection de combustible, étant entendu que cette dernière pression dépend de la pression d'admission Pr du moteur.

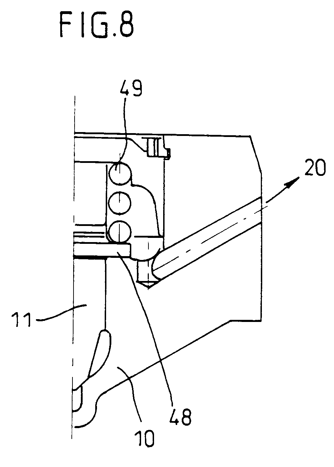

Les moyens de rappel hydrauliques de l'aiguille 11 ainsi constituée sont extrêmement puissants et provoquent une retombée très rapide de cette aiguille lors de la décharge de la pression dans la première cavité 3. Cette fermeture extrêmement rapide est très favorable à la réduction ou l'élimination de produits imbrûlés, généralement rencontrés dans les moteurs au moment de la fermeture du ou des orifices d'injection. En revanche, cette forte accélération de l'aiguille peut entraîner un choc important de celle-ci sur son siège 14, avec le risque conséquent de détérioration ou de rupture de celui-ci. Pour remédier à cet inconvénient, il peut être avantageux de munir l'aiguille 11 d'un dispositif d'amortissement hydraulique. Comme représenté à la figure 8, ladite aiguille 11 peut comporter à cet effet, à sa partie supérieure, un épaulement 48 pouvant coopérer avec un dégagement correspondant aménagé à la partie supérieure de la paroi cylindrique 13 de la buse 1O. La distance minimale entre l'épaulement 48 de l'aiguille 11 et le dégagement de la buse 1O sera positive et suffisamment petite pour entraîner le laminage du liquide interposé entre ceux-ci et amortir de ce fait la retombée de l'aiguille, avant qu'elle ne vienne au contact du siège. A titre d'exemple, une aiguille 11 ayant un diamètre de 1O mm sur sa partie cylindrique 15 sera avantageusement amortie par un épaulement 48 d'un diamètre de 2O mm, se rapprochant jusqu'à O,O2 mm du dégagement correspondant de la buse 1O, lorsque l'aiguille 11 entre en contact avec le siège 14. L'amortisseur hydraulique décrit en référence à la figure 8 peut bien entendu être remplacé par un amortisseur hydraulique équivalent, de préférence agencé de façon que son fonctionnement soit indépendant du degré d'usure longitudinal de l'aiguille 11.

## Revendications

1. Dispositif d'injection de liquide dans au moins une chambre (1) pressurisée par un gaz et faisant partie d'une machine à fonctionnement périodique (2), telle qu'un moteur à combustion interne, dispositif qui comporte un organe de mise en pression du liquide à injecter, constitué par une première cavité (3), de volume variable, délimitée par un piston (4) animé d'un mouvement alternatif à l'intérieur d'un cylindre (5),
laquelle première cavité (3) communique d'une part avec des moyens de réserve de liquide sous basse pression (6) par l'intermédiaire d'un organe de commande (7) établissant cycliquement une telle communication en synchronisme avec le fonctionnement périodique de ladite machine (2) et d'autre part par un passage ouvert en permanence (8), sous réserve de la présence d'un clapet de réaspiration ou organe analogue, avec un injecteur (9) constitué d'une buse (10) et d'une aiguille mobile (11), de révolution,
laquelle buse (10) comporte une deuxième cavité (12), reliée au susdit passage et délimitée latéralement par une paroi cylindrique (13) de directrice circulaire et axialement par une paroi partiellement conique (14) formant siège et coaxiale à ladite paroi cylindrique (13), et au moins un orifice d'injection (17) débouchant dans la susdite chambre pressurisée (1),
laquelle aiguille (11) comporte une partie cylindrique (15) formant piston et capable de coulisser avec un jeu de fonctionnement minimal à l'intérieur de la susdite paroi cylindrique (13) de la buse (10) et une partie conique (16) coopérant avec le susdit siège (14),
laquelle aiguille (11) est agencée d'une part de façon à être maintenue, au repos, en appui sur ce siège (14) par des moyens de rappel de façon à interrompre la communication entre la deuxième cavité (12) et le ou les orifices d'injection (17) et d'autre part de façon que sa section d'appui sur le siège (14), projetée sur un plan perpendiculaire à l'axe (X-X) de l'aiguille (11), soit inférieure à la section transversale de la partie cylindrique (15) formant piston de l'aiguille (11), la face libre (18) de la partie cylindrique (15) de l'aiguille (11) formant piston délimitant une troisième cavité de volume variable (19) qui communique avec un accumulateur sous pression (20) dudit liquide en constituant ainsi les susdits moyens de rappel,
caractérisé en ce que la première cavité (3) communique avec la troisième cavité (19) par l'intermédiaire d'un orifice calibré (23) et d'un clapet uni-directionnel (24) montés en série et en ce que le susdit accumulateur (20) communique avec les susdits moyens de réserve de liquide à basse pression (6) par l'intermédiaire d'un orifice de fuite (25), à section de passage variable, équipé de moyens de réglage (26) agencés de manière à maintenir la pression du liquide dans l'accumulateur (20) à une valeur sensiblement constante, pour chaque régime de fonctionnement donné, au cours du fonctionnement périodique de la machine (2).

2. Dispositif d'injection selon la revendication 1, caractérisé en ce que les susdits moyens de réglage (26) de l'orifice de fuite (25) sont sensibles à au moins un paramètre de fonctionnement de la machine (2) et agencés de façon à asservir à ce paramètre de fonctionnement la pression sensiblement constante régnant dans l'accumulateur (20).

3. Dispositif d'injection selon la revendication 2, caractérisé en ce que le susdit paramètre de fonctionnement de la machine (2) est un paramètre dont dépend la valeur de la pression dans la chambre pressurisée (1) au moment de l'injection du liquide.

4. Dispositif d'injection selon l'une quelconque des revendications 1 à 3, utilisé pour alimenter en combustible liquide les chambres de travail (1) de volume variable d'un moteur à combustion interne (2) comprenant au moins deux chambres de travail (1, 1a, 1b), caractérisé en ce que la troisième cavité (19, 19a, 19b) propre à l'injecteur (9, 9a, 9b) de chacune des chambres de travail (1, 1a, 1b) communique avec un accumulateur unique (20) de liquide sous pression, lequel communique avec les moyens de réserve de liquide sous basse pression (6) par l'intermédiaire d'un unique orifice de fuite (25) à section de passage variable et en ce que les passages et communications entre la première cavité (3, 3a, 3b) propre à chaque injecteur (9, 9a, 9b) d'une part et, respectivement, l'injecteur, l'organe de commande (7, 7a, 7b) établissant une communication cyclique avec les moyens de réserve de liquide sous basse pression (6), l'orifice calibré (23, 23a, 23b) et son clapet uni-directionnel (24, 24a, 24b) vers l'accumulateur unique (20) d'autre part étant aussi identiques que possible d'un injecteur (9, 9a, 9b) à l'autre.

5. Dispositif d'injection de combustible selon l'ensemble des revendications 3 et 4, caractérisé en ce que le paramètre de fonctionnement est la pression régnant dans le collecteur d'admission (35) du moteur (2).

6. Dispositif d'injection de combustible selon l'une des revendications 4 et 5, caractérisé en ce que le susdit organe de commande (7) établissant la communication cyclique entre la ou les premières cavités (3, 3a, 3b) et les moyens de réserve à basse pression de combustible (6) est un distributeur tournant (39) constitué par un fourreau cylindrique creux (41), communiquant avec les susdits moyens de réserve à basse pression de combustible (6), dans lequel débouchent les communications propres à la ou chacune desdites premières cavités (3, 3a, 3b) et à l'intérieur duquel tourne, en synchronisme avec l'arbre principal (42) du moteur (2), un arbre (43) comportant des paliers et des évidements ainsi que des portions de surface cylindrique circulaire (44) de diamètre extérieur égal, au jeu de fonctionnement près, au diamètre intérieur du fourreau (41) et coopérant avec les débouchés (46) des susdites communications de façon à interrompre celles-ci cycliquement, pendant une durée identique pour chaque injecteur (9, 9a, 9b) et déphasée en fonction de l'ordre d'allumage des cylindres (32, 32a, 32b) du moteur (2).

7. Dispositif d'injection de combustible selon la revendication 6, caractérisé en ce qu'il comprend des moyens (47) permettant de régler, pendant le fonctionnement du moteur (2), la durée angulaire de la susdite communication cyclique en fonction de la largeur angulaire des susdites portions de surface cylindrique (44) et agissant par déplacement axial dudit arbre (43) par rapport au fourreau (41).

8. Dispositif d'injection de combustible selon la revendication 7, caractérisé en ce qu'il comprend un mécanisme d'entraînement en rotation dudit arbre (43) à calage variable, capable de modifier en fonctionnement la phase de l'interruption de la susdite communication cyclique, par rapport à l'arbre principal (42) du moteur (2).

9. Dispositif d'injection selon l'une quelconque des revendications 1 à 8, caractérisé en ce qu'au moins un orifice d'injection cylindrique (17), percé dans la buse (10), assure la communication entre la deuxième cavité (12, 12a, 12b) et la chambre pressurisée (1, 1a, 1b), lorsque l'aiguille (11) est écartée de son siège (14).

10. Dispositif d'injection selon la revendication 9, caractérisé en ce que le ou les orifices d'injection cylindriques (17) sont percés dans la buse (10) en aval du siège (14) de l'aiguille (11).

11. Dispositif d'injection selon la revendication 10, caractérisé en ce que le ou les orifices d'injection cylindriques (17) sont percés dans la buse (10), sur la portée conique ou siège sur laquelle s'appuie l'aiguille (11) lorsqu'elle est en position de fermeture.

12. Dispositif d'injection selon l'une quelconque des revendications 1 à 11, caractérisé en ce que les susdits moyens de réglage (26) sont agencés de façon à établir, dans l'accumulateur (20), une pression telle que la pression de liquide dans la deuxième cavité (12, 12a, 12b), lorsque l'aiguille (11) est écartée de son siège (14), soit au moins égale à trois fois la pression régnant dans la chambre pressurisée (1, 1a, 1b) au moment de l'injection de liquide.

13. Dispositif d'injection selon l'une quelconque des revendications 1 à 12, caractérisé en ce que les susdits moyens de rappel de l'aiguille (11) sur son siège (14) comprennent en outre un ressort mécanique (49) dimensionné pour permettre le fonctionnement du dispositif d'injection lors de la mise en route de la machine (2) à faible fréquence, alors que la pression du liquide n'est pas encore établie dans l'accumulateur (20).

14. Dispositif d'injection selon l'une quelconque des revendications 1 à 13, caractérisé en ce que l'aiguille (11) est munie d'un amortisseur hydraulique agissant de préférence sur la fin du mouvement de l'aiguille (11) vers son siège (14).

15. Moteur à combustion interne, à chambres de travail de volume variable (1, 1a, 1b) et à injection directe de combustible liquide dans ces chambres, caractérisé en ce qu'il est équipé d'un dispositif d'injection selon l'une quelconque des revendications 1 à 14.

## Patentansprüche

1. Einspritzvorrichtung zum Einspritzen von Flüssigkeit in zumindest eine Kammer (1), die durch ein Gas unter Druck gehalten ist und einen Teil einer periodisch betriebenen Maschine (2) bildet, wie beispielsweise eines Verbrennungsmotors, wobei die Vorrichtung ein Organ zum Unterdrucksetzen einer einzuspritzenden Flüssigkeit umfaßt, das aus einem ersten Hohlraum (3) mit veränderlichem Volumen besteht, das durch einen Kolben (4) begrenzt ist, der im Innern eines Zylinders (5) zu einer hin- und hergehenden Bewegung veranlaßt ist,
wobei der erste Hohlraum (3) einerseits mit einer unter niedrigem Druck stehenden Flüssigkeitsvorratseinrichtung (6) unter Zwischenschaltung eines Steuerorgans (7) kommuniziert, das synchron mit dem periodischen Betrieb der Maschine (2) eine derartige Kommunikation herstellt, und andererseits über einen durchgehend offenen Durchlaß (8), in dem gegebenenfalls eine Wiederansaugklappe oder ein dazu analoges Organ angeordnet ist, mit einer Einspritzdüse (9), die aus einer Düse (10) und einer beweglichen Nadel (11) in Gestalt eines Rotationskörpers besteht,
wobei die Düse (10) einen zweiten Hohlraum (12) umfaßt, der mit dem Durchlaß verbunden und seitlich durch eine Zylinderwand (13) mit kreisförmiger Mantellinie und axial durch eine teilweise konische Wand (14) begrenzt ist, die einen Sitz bildet und koaxial zur Zylinderwand (13) verläuft, und zumindest eine Einspritzöffnung (17), die in die unter Druck gehaltene Kammer (1) mündet,
wobei die Nadel (11) einen zylindrischen Bereich (15) umfaßt, der einen Kolben bildet und mit einem minimalen Arbeitsspiel im Innern der Zylinderwand (13) der Düse (10) zu gleiten vermag, und einen konischen Bereich (16), der mit dem Sitz (14) zusammenwirkt,
wobei die Nadel (11) einerseits derart ausgelegt ist, daß sie in der Ruhestellung durch eine Rückstelleinrichtung in Anlage auf dem Sitz (14) derart gehalten ist, daß die Kommunikation zwischen dem zweiten Hohlraum (12) und der Einspritzöffnung oder den Einspritzöffnungen (17) unterbrochen ist, und andererseits derart, daß ihr Anlagequerschnitt auf dem Sitz (14) in der Projektion auf eine lotrecht zur Achse (X-X) der Nadel (11) verlaufenden Ebene kleiner ist als der Querschnitt des den Kolben bildenden zylindrischen Bereichs (15) der Nadel (11), wobei die Stirnfläche (18) des den Kolben bildenden zylindrischen Bereichs (15) der Nadel (11) einen dritten Hohlraum veränderlichen Volumens (19) begrenzt, das mit einem unter Druck stehenden Flüssigkeitsakkumulator unter Bildung der Rückstelleinrichtung kommuniziert, dadurch gekennzeichnet, daß der erste Hohlraum (3) mit dem dritten Hohlraum (19) unter Zwischenschaltung einer kalibrierten Öffnung (23) und einer in einer Richtung wirkenden Klappe (24) kommuniziert, die in Reihe angeordnet sind, und daß der Akkumulator (20) mit der unter niedrigem Druck stehenden Flüssigkeitsvorratseinrichtung (6) unter Zwischenschaltung einer Durchlaßöffnung (25) mit veränderlichem Durchlaßquerschnitt kommuniziert, die mit einer Reguliereinrichtung (26) versehen ist, die dazu ausgelegt ist, den Flüssigkeitsdruck im Akkumulator (20) für jeden gegebenen Betriebsbereich im Lauf des periodischen Betriebs der Maschine (2) auf einem im wesentlichen konstanten Druck zu halten.

2. Einspritzvorrichtung nach Anspruch 1, dadurch gekennzeichnet, daß die Reguliereinrichtung (26) für die Durchlaßöffnung (25) auf zumindest einen Betriebsparameter der Maschine (2) anspricht und dazu ausgelegt ist, diesem Betriebsparameter den im wesentlichen konstanten Druck zu unterwerfen, der in dem Akkumulator (20) herrscht.

3. Einspritzvorrichtung nach Anspruch 2, dadurch gekennzeichnet, daß der Betriebsparameter des Motors (2) ein Parameter ist, von dem der Wert des Drucks in der unter Druck gehaltenen Kammer (1) im Augenblick der Flüssigkeitseinspritzung abhängt.

4. Einspritzvorrichtung nach einem der Ansprüche 1 bis 3 zum Speisen der Arbeitskammern (1) veränderlichen Volumens eines Verbrennungsmotors (2), der zumindest zwei Arbeitskammern (1,1a,1b) umfaßt, mit einer Brennstofflüssigkeit, dadurch gekennzeichnet, daß der dritte Hohlraum (19,19a,19b), der zur Einspritzdüse (9,9a,9b) jeder Arbeitskammer (1,1a,1b) gehört, mit einem einzigen Akkumulator (20) für unter Druck stehendes Fluid kommuniziert, der mit der unter niedrigem Druck stehenden Flüssigkeitsvorratseinrichtung (6) veränderlichen Durchlaßquerschnitts kommuniziert, und daß die Durchlässe und Kommunikationsverbindungen zwischen dem ersten Hohlraum (3,3a,3b), der zu jeder Einspritzdüse (9,9a,9b) gehört einerseits und der Einspritzdüse, dem Steuerorgan (7,7a,7b), das einen Kommunikationszyklus mit der unter niederem Druck stehenden Flüssigkeitsvorratseinrichtung (6) herstellt, der kalibrierten Öffnung (23,23a,23b) und ihrer in eine Richtung wirkenden Klappe (24,24a,24b) zum einzigen Akkumulator (20) andererseits von einer Einspritzdüse (9,9a,9b) zu anderen so identisch wie möglich sind.

5. Brennstoffeinspritzvorrichtung nach Anspruch 3 und 4 zusammengenommen, dadurch gekennzeichnet, daß der Betriebsparameter der im Ansaugkrümmer (35) des Motors (2) herrschende Druck ist.

6. Brennstoffeinspritzvorrichtung nach Anspruch 4 oder 5, dadurch gekennzeichnet, daß das Steuerorgan (7), das die zyklische Kommunikation zwischen dem ersten Hohlraum oder den ersten Hohlräumen (3,3a,3b) und der unter niedrigem Druck stehenden Flüssigkeitsvorratseinrichtung (6) herstellt, ein Drehverteiler (39) ist, der von einer hohlen Zylinderhülse (41) gebildet ist, die mit der unter niedrigem Druck stehenden Flüssigkeitsvorratseinrichtung (6), in die die Kommunikationsverbindungen münden, die zu dem ersten Hohlraum oder zu jedem der ersten Hohlräume (3,3a,3b) und zum Innern der Drehhülse gehören, synchron mit der Hauptantriebswelle (42) des Motors (2) kommuniziert, wobei eine Welle (43) Wellenlager und Vertiefungen, sowie kreiszylinderförmige Oberflächenbereiche (44) gleichen Außendurchmessers aufweist, die ein knappes Arbeitsspiel gegenüber dem Innendurchmesser der Hülse (41) aufweisen und mit den Auslässen (46) der Kommunikationsverbindungen derart zusammenwirken, daß diese während einer Zeitdauer unterbrochen werden, die für jede Einspritzdüse (9,9a,9b) identisch und als Funktion der Zündreihenfolge der Zylinder (32,32a,32b) des Motors (2) phasenverschoben ist.

7. Brennstoffeinspritzvorrichtung nach Anspruch 6, dadurch gekennzeichnet, daß sie eine Einrichtung (47) zum Regeln der Winkelzeitdauer des Kommunikationszyklus als Funktion der Winkelöffnung der zylindrischen Oberflächenbereiche (44) während des Betriebs des Motors (2) umfaßt, wobei die Einrichtung eine axiale Verstellung der Welle (43) in Bezug auf die Hülse (41) bewirkt.

8. Brennstoffeinspritzvorrichtung nach Anspruch 7, dadurch gekennzeichnet, daß sie eine variabel einstellbare Drehantriebseinrichtung für die Welle umfaßt, die dazu ausgelegt ist, die Unterbrechungsphase des Kommunikationszyklus während des Betriebs in Bezug auf die Hauptantriebswelle (42) des Motors (2) zu modifizieren.

9. Brennstoffeinspritzvorrichtung nach einem der Ansprüche 1 bis 8, dadurch gekennzeichnet, daß zumindest eine in die Düse (10) eingelassene zylindrische Einspritzöffnung (17) die Kommunikation zwischen dem zweiten Hohlraum (12,12a,12b) und der unter Druck gehaltenen Kammer (1,1a,1b) sicherstellt, während die Nadel (11) von ihrem Sitz (14) abgehoben ist.

10. Brennstoffeinspritzungvorrichtung nach Anspruch 9, dadurch gekennzeichnet, daß die zylindrische Einspritzöffnung oder die zylindrischen Einspritzöffnungen (17) in die Düse (10) stromab vom Sitz (14) der Nadel (11) eingelassen ist oder sind.

11. Brennstoffeinspritzvorrichtung nach Anspruch 10, dadurch gekennzeichnet, daß die zylindrische Einspritzöffnung oder die zylindrischen Einspritzöffnungen (17) in die Düse (10) in die konische Auflagefläche oder den Sitz eingelassen ist oder sind, auf dem sich die Nadel (11) abstützt, wenn sie sich in ihrer Schließstellung befindet.

12. Brennstoffeinspritzvorrichtung nach einem der Ansprüche 1 bis 11, dadurch gekennzeichnet, daß die Reguliereinrichtung (26) derart ausgelegt ist, daß sie im Akkumulator (20) einen dem Flüssigkeitsdruck im zweiten Hohlraum (12,12a,12b) entsprechenden Druck aufbaut, wenn die Nadel (11) von ihrem Sitz (14) abgehoben ist, wobei dieser Druck gleich dem in der unter Druck gehaltenen Kammer (1,1a,1b) im Augenblick der Flüssigkeitseinspritzung herrschenden Druck oder dreimal so groß wie dieser Druck ist.

13. Brennstoffeinspritzvorrichtung nach einem der Ansprüche 1 bis 12, dadurch gekennzeichnet, daß die Einrichtung zum Rückstellen der Nadel (11) auf ihren Sitz (14) zusätzlich eine mechanische Feder (49) umfaßt, die derart dimensioniert ist, daß sie den Betrieb der Einspritzvorrichtung beim Anwerfen des Motors (2) mit niedriger Drehzahl sowie dann erlaubt, wenn der Flüssigkeitsdruck im Akkumulator (20) noch nicht aufgebaut worden ist.

14. Brennstoffeinspritzvorrichtung nach einem der Ansprüche 1 bis 13, dadurch gekennzeichnet, daß die Nadel (11) mit einer hydraulischen Dämpfungsvorrichtung versehen ist, die vorzugsweise das Ende der Bewegung der Nadel (11) auf ihren Sitz (14) beeinflußt.

15. Verbrennungsmotor mit Arbeitskammern (1,1a,1b) variablen Volumens und mit einer Kraftstofflüssigkeitsdirekteinspritzung in diese Kammern, dadurch gekennzeichnet, daß er mit einer Einspritzvorrichtung nach einem der Ansprüche 1 bis 14 versehen ist.

## Claims

1. Device for injecting liquid into at least one chamber (1) pressurized by a gas and forming part of a periodic operation machine (2) such as an internal combustion engine, the device comprising a unit for pressurizing the liquid to be injected formed by a variable volume first cavity (3) delimited by a piston (4) reciprocating inside a cylinder (5),
which first cavity (3) communicates, on one hand, with low-pressure liquid reserve means (6) through a control unit (7) establishing such communication cyclically in synchronism with the periodic operation of said machine (2) and, on the other hand, via a passage (8) that is open at all times, except for the presence of a re-aspiration valve or like unit, with an injector (9) formed by a nozzle (10) and a mobile needle (11) which is a body of revolution,
which nozzle (10) comprises a second cavity (12) connected to said passage and delimited laterally by a circular cylindrical wall (13) and axially by a partially conical wall (14) forming a seat and coaxial with said cylindrical wall (13) and at least one injector orifice (17) discharging into said pressurized chamber (1),
which needle (11) has a cylindrical part (15) forming a piston and capable of sliding with minimal operating clearance inside said cylindrical wall (13) of said nozzle (10) and a conical part (16) cooperating with said seat (14),
which needle (11) is arranged, on one hand, to be held when idle in bearing engagement with said seat (14) by return means so as to interrupt communication between said second cavity (12) and said injector orifice(s) (17) and, on the other hand, so that its cross-section bearing on said seat (14) , when projected onto a plane perpendicular to the axis (x-x) of said needle (11), is less than the transverse cross-section of the cylindrical part (15) of said needle (11) forming said piston, the free surface (18) of said cylindrical part (15) of said needle (11) forming said piston delimiting a variable volume third cavity (19) which communicates with a pressurized accumulator (20) of said liquid and thereby constitutes said return means,
characterised in that said first cavity (3) communicates with said third cavity (19) through a calibrated orifice (23) and a one-way valve (24) connected in series and in that said accumulator (20) communicates with said low-pressure liquid reserve means (6) through a variable cross-section leakage orifice (25) provided with adjustment means (26) arranged to maintain the pressure of the liquid in said accumulator (20) at a substantially constant value for each given operating conditions during periodic operation of said machine (2).

2. Injection device according to claim 1, characterised in that said adjustment means (26) of said leakage orifice (25) are responsive to at least one operating parameter of said machine (2) and arranged to slave to this operating parameter the substantially constant pressure in said accumulator (20).

3. Injection device according to claim 2, characterised in that said operating parameter of said machine (2) is a parameter conditioning the pressure value in said pressurized chamber (1) at the time said liquid is injected.

4. Injection device according to any one of claims 1 to 3, employed to feed liquid fuel to the variable volume working chambers (1) of an internal combustion engine (2) comprising at least two working chambers (1, 1a, 1b), characterised in that said third cavity (19, 19a, 19b) specific to the injector (9, 9a, 9b) of each working chamber (1, 1a, 1b) communicates with a single pressurized liquid accumulator (20) which communicates with said low-pressure liquid reserve means (6) through a single variable cross-section leakage orifice (25) and in that the passages and communications between said first cavity (3, 3a, 3b) specific to each injector (9, 9a, 9b), on one hand, and the respective injector, control unit (7, 7a, 7b) establishing cyclic communication with said low-pressure liquid reserve means (6), calibrated orifice (23, 23a, 23b) and its one-way valve (24, 24a, 24b) to said single accumulator (20), on the other hand, are as closely identical as possible for each injector (9, 9a, 9b).

5. Fuel injection device according to claims 3 and 4, characterised in that said operating parameter is the pressure in an inlet manifold (35) of said engine (2).

6. Fuel injection device according to one of claims 4 and 5, characterised in that said control unit (7) establishing cyclic communication between said first cavity or cavities (3, 3a, 3b) and said low-pressure fuel reserve means (6) is a rotary distributor (39) comprising a hollow cylindrical chamber (41) communicating with said low-pressure fuel reserve means (6) into which discharge the communications specific to said or each first cavities (3, 3a, 3b) and inside which rotates synchronously with the main crankshaft (42) of the engine (2), a shaft (43) comprising bearings and recesses and circular cylindrical surface portions (44) with an outside diameter, allowing for operating clearances, equal to the inside diameter of said chamber (41) and cooperating with the discharges (46) of said communications so as to interrupt them cyclically for an identical duration for each injector (9, 9a, 9b) and phased according to the order in which the cylinders (32, 32a, 32b) of said engine (2) fire.

7. Fuel injection device according to claim 6, characterised in that it comprises means (47) for adjusting during operation of the engine (2), the angular duration of said cyclic communication according to the angular width of said cylindrical surface portions (44) and operating by axial displacement of said shaft (43) relative to said chamber (41).

8. Fuel injection device according to claim 7, characterised in that it comprises a variable angular setting rotary drive mechanism for said shaft (43) capable of modifying in operation the phase of interruption of said cyclic communication relative to the main crankshaft (42) of said engine (2).

9. Injection device according to any one of claims 1 to 8, characterised in that at least one cylindrical injector orifice (17) formed in said nozzle (10) provides said communication between said second cavity (12, 12a, 12b) and said pressurized chamber (1, 1a, 1b) when said needle (11) is separated from its seat (14).

10. Injection device according to claim 9, characterised in that said cylindrical injector orifice(s) (17) is (are) formed in said nozzle (10) on the downstream side of said seat (14) of said needle (11).

11. Injection device according to claim 10, characterised in that said cylindrical injector orifice(s) (17) is (are) formed in said nozzle (10) on the conical bearing surface or seat on which said needle (11) bears in the closed position.

12. Injection device according to any one of claims 1 to 11, characterised in that said adjustment means (26) are arranged to establish, in said accumulator (20), a pressure such that the pressure of liquid in said second cavity (12, 12a, 12b), when said needle (11) is separated from its seat (14), is at least three times the pressure in said pressurized chamber (1, 1a,1b) at the time said liquid is injected.

13. Injection device according to any one of claims 1 to 12, characterised in that said means for returning said needle (11) to its seat (14) further comprise a mechanical spring (49) rated to enable operation of the injection device when said machine (2) is started up at low frequency while the pressure of said liquid is not yet established in said accumulator (20).

14. Injection device according to any one of claims 1 to 13, characterised in that said needle (11) is provided with a hydraulic damper operating preferably at the end of movement of said needle (11) towards its seat (14).

15. Internal combustion engine with variable volume working chambers (1, 1a, 1b) and featuring direct injection of liquid fuel into said chambers, characterised in that it is provided with an injection device according to any one of claims 1 to 14.
